# EUROPEAN PATENT APPLICATION

(11) **EP 0 861 749 A2**
(43) Date of publication of application: **02.09.1998**
(21) Application number: 98500057.9
(22) Date of filing: 24.02.1998
(51) Int. Cl.: B60H 1/24

(54) **Heat refreshing device applicable to an automobile canopy cover**

(30) Priority: 27.02.1997 ES 9700425
(71) Applicant: Balliu Falgueras, Carmen, 17455 Caldes de Malavella (Girona) (ES)
(72) Inventor: Balliu Falgueras, Carmen, 17455 Caldes de Malavella (Girona) (ES)
(74) Representative: Flaccus, Rolf-Dieter, Dr.

(57) **Abstract**

Heat refreshing device applicable to an automobile canopy cover. This device is comprised of a housing consisting of a box (1) and cover (2), which can be secured to the outside of a vehicle roof and attached to the parts comprised within a hole (11) in a canopy cover (10) specifically for said vehicle. The housing is equipped with windows (3) and openings (4) for the air to flow through and includes a turbine (18) powered by a vane (19) which is driven by the wind or by a motor for the purpose of enhancing the flow of heat between the canopy cover (10) and the vehicle body.

This invention is applicable for keeping the passenger compartment of an automobile parked in the sun cool.

## Description

### OBJECT

The Object of the present Patent of Invention refers to a heat refreshing device that can be affixed to an automobile canopy cover which contributes several advantages to the use for which it is intended which shall be discussed at a further point herein apart from others inherent to the configuration and structure thereof.

### ANTECEDENTS OF THE PATENT

Different canopy covers of the type conceived for being applied directly onto the vehicle body, which they cover fully or partially, and to which they are secured using the suitable means are currently known. These canopy covers are made of a fabric material which comes into contact with the surface of the vehicle bodywork, there being no space in between the two allowing for the cooling of the heat in the air for the purpose of preventing the overheating of said bodywork and therefore the heating of the passenger compartment inside the vehicle.

Therefore, it is obvious that the current canopy covers of the aforesaid type practically confine their function to that of mere components protecting the body against dirt, dust, etc., but not as a true component for shielding against the heat caused by the sun's rays.

### SUMMARY OF THE INVENTION

The object of the present Patent of Invention refers to a heat refreshing device applicable in an automobile canopy cover, both components being of a structure and configuration by means of which, when combined, achieves a circulation of heat which takes place between the canopy cover and the vehicle body, by means of which the inside of the passenger compartment is kept cool.

To this end, this device is comprised of a housing made of cast material with openings for the air to flow through, which includes means for the self-attachment thereof to the vehicle roof in a position inserted into a hole in the base of the canopy cover, with which it is used in conjunction. Likewise, the housing includes active means for generating a current of air which is created by an exhaust draught for removing the air heated between the canopy cover and body and the refreshing thereof by cool air from the outside, contributing to keep the inside of the passenger compartment cool.

The material comprising the canopy cover is a special, recyclable, environmentally-friendly sun-reflecting canopy cover treated with an opaque heat-repellent paint which is used to visually and thermally insulate the inside of the passenger compartment.

The present Patent of Invention affords the advantages described hereinabove in addition to others which shall be found to readily follow from the example of the embodiment which is described in greater detail in following, for the purpose of aiding in the comprehension of the features explained hereinabove, whilst also setting out different details and attaching drawings to the present report for such a purpose solely as a non-limiting example of the scope of the present invention, a practical case of the object thereof is shown.

### BRIEF DESCRIPTION OF THE DRAWINGS

In the drawings:

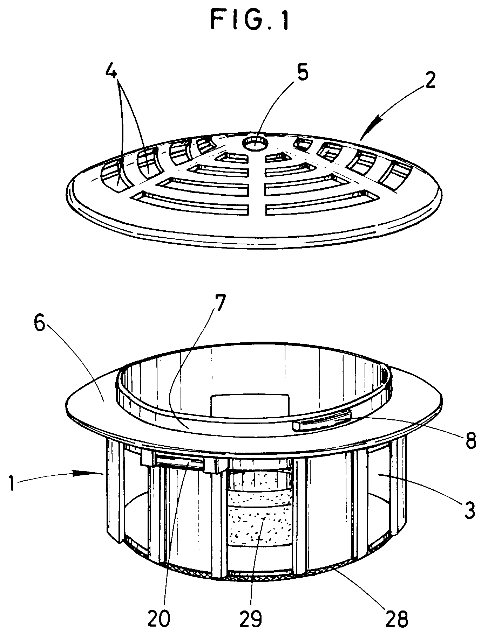

Fig 1. provides a perspective view of a dismantled heat refreshing device.

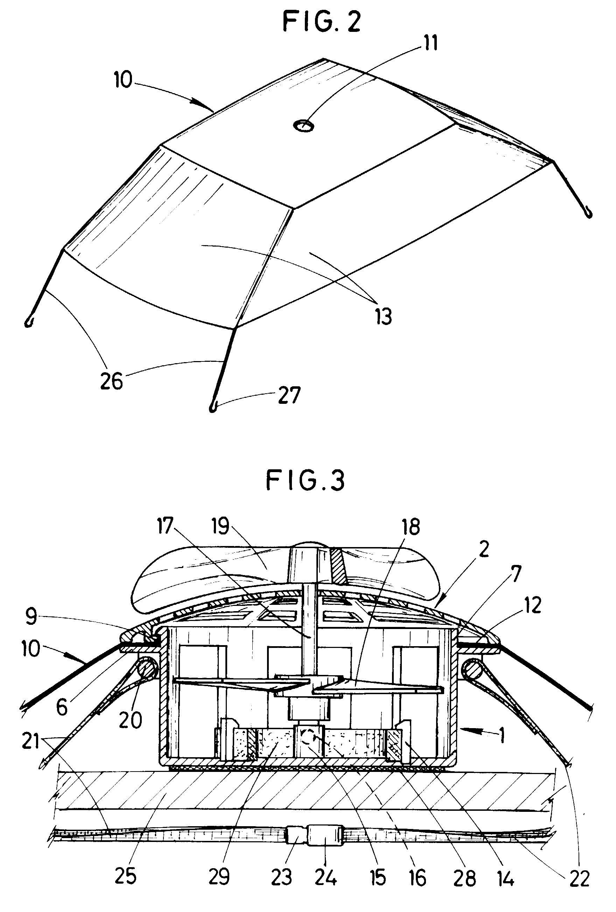

Fig. 2. is a perspective view of the canopy cover conceived to be used in conjunction with the aforesaid refreshing device.

Fig. 3 shows a cross-section of the diameter of the device equipped with the active means for enhancing the flow of heat.

### DESCRIPTION OF A PREFERENTIAL EMBODIMENT

Referring to the Figures, one finds the embodiment thereof to entail a heat refreshing device comprised of a housing formed by two parts -1- and -2-, the first of which is in the shape of drinking glass with a window -3- for the air to flow through, whilst the other part -2-. comprises a cover with concentric ring-shaped slots -4- and a hole -5- in the center.

Part -1- has a radial fin -6- above which a small neck-7- is formed as an opening with raised areas which comprise threading for securing the cover -2-, in conjunction with teeth -9-, on the cover which comprise the counterthreading. These two parts -1- and -2- are joined together to secure a part -10- into place which configures a canopy cover for an automobile. The canopy cover has a hole -11- at its base, the parts contained within -12- which are held into place between the radial fin -6- and the cover -2-.

The canopy cover -10- has sides -13- which cover the vehicle windows, front windshield and back window. Likewise, said canopy cover is fitted with flexible ties -26- with hook-shaped anchoring devices -27- for hooking onto the profile of the fender.

The body -1- has a ring-shaped magnet -29- built in and held in place at the bottom thereof by means of lugs -14-. Located in a position coaxial to the magnet -29- is a column -15- which has a hollow at the top for a ball -16- acting as a bearing on which the lower end of a vertically-positioned shaft -17- rests positioned to revolve. Said shaft is fitted with some blades -18- comprising a turbine. The shaft is fitted through the hole -15- in the cover -2- and is connected at the exposed end to a propeller -19-.

The body -1- has some ties -20- for securing the ends of both strips -21- and -22- made of sturdy material which are joined together by their distal ends by means of components-23- and -24- of a fast-clip buckle which is located inside the vehicle cabin positioned beneath the roof -25- thereof for the purpose of securing the housing and canopy cover when the doors of said vehicle are closed.

The base of the body -1- is provided with a protection-28- which prevents the roof bodywork -25- from being scratched.

The canopy cover -10- is comprised of a very fine special fabric treated with a heat-repellent paint. The surface of the canopy cover in conjunction with the housing 1-2- comprise an air chamber enveloping the vehicle passenger compartment such that when the air is heated, it rises and flows out through the windows -3- and slots -4-, creating a heat flow which provides for a constant air-refreshing. Likewise, the fan -19- revolves driven by the wind or by an electric motor, not shown in the drawings, which makes the blades -18- turn in the form of a turbine, which aids in removing the hot air by increasing the draught.

The aforesaid motor could be powered by means of a power pack comprised of a solar panel on the outside of the housing -1- -2- or, alternatively, by the vehicle battery proper.

The canopy cover -10- can serve as a medium for printing signs or advertising.

## Claims

1. A heat refreshing device applicable to an automobile canopy cover of the type made of a special, recyclable, environmentally-friendly heat-reflecting fabric, the upper surface of which is treated with a heat-repellent paint, configuring a base and four sides which fold out, respectively, over the roof and glassed-in sides of the vehicle, protecting the passenger compartment and including four anchoring devices, each of which is located at the end of a flexible tie for securing the same to the profile of the fenders, characterized essentially because the base of the canopy cover has a minimum of one hole for the placement of a housing made of a cast material provided with means for securing the same to the parts comprised within the hole, means for self-securing to the surface of the roof bodywork and mechanical means for securing it to the vehicle, and which also includes means for enhancing the flow of heat between the surface of the canopy cover and the surface of the vehicle covered by said canopy cover in order to increase the cooling of the passenger compartment.

2. A heat refreshing device applicable to an automobile canopy cover as per the immediately preceding claim, characterized because the housing is comprised of two parts, one of which is shaped like a drinking glass with windows in its side wall for allowing the air to flow through, whilst the other part is comprised of a cover adjustable to the opening of the aforesaid part, provided with ring-shaped slots for air circulation and a hole in the geometric center thereof, the point at which these two parts join together being a ring-shaped area holding the parts comprised within the canopy cover hole into place.

3. A heat refreshing device applicable to an automobile canopy cover as per claims 1 and 2, characterized because the means for self-attachment of the housing to the vehicle roof are comprised of a magnet located inside the drinking-glass shaped body and held into place at the bottom thereof by means of some equally-spaced vertical appendages which jut out from said bottom and which are harpoon-shaped at their free ends.

4. A heat refreshing device applicable to an automobile canopy cover as per claims 1 and 2, characterized because the mechanical means for securing the housing to the vehicle are comprised of some handles positioned directly opposite one another on the part shaped like a drinking glass, to which the ends of each one of the sturdy strips of sufficient length to tie together sturdily in the end by their distal ends inside the passenger compartment of the vehicle, allowing for the closing of the vehicle doors.

5. A heat refreshing device applicable to an automobile canopy cover as per claim 1, characterized because the means for enhancing the flow of heat between the canopy cover and the vehicle body are comprised of a turbine located on the housing which is driven by an external fan, the shaft of which is coaxial to the shaft of said turbine and fitting through the hole in the center of the housing.

6. A heat refreshing device applicable to an automobile canopy cover as per claims 1 and 5, characterized because the turbine is driven by an electric motor powered by a solar panel situated on the exterior of the housing.

7. A heat refreshing device applicable to an automobile canopy cover as per claims 1 and 5, characterized because the turbine is driven by an electric motor equipped with an adapter plug for the vehicle cigarette lighter.
